# EUROPEAN PATENT SPECIFICATION

(11) **EP 2 375 523 B1**
(45) Date of publication and mention of the grant of the patent: **08.06.2016**
(21) Application number: 11161923.5
(22) Date of filing: 11.04.2011
(51) Int. Cl.: H02G 3/12, H02G 3/14

(54) **Mounting box for mounting in a wall**
Montagekasten zum Einbau in eine Wand
Boîte de montage à assembler sur un mur

(30) Priority: 12.04.2010 BE 201000237
(43) Date of publication of application: 12.10.2011
(73) Proprietor: NIKO, N.V., 9100 Sint-Niklaas (BE)
(72) Inventor: Tas, Johan Helena Alice, 9100, Sint-Niklaas (BE); Cooreman, Tom, 9310, Meldert (BE); Heyndrickx, Wim Ferdinand Madeleine, 2070, Zwijndrecht (BE)
(74) Representative: D'Halleweyn, Nele Veerle Trees Gertrudis

(56) References cited:
- WO-A1-02/13346
- DE-A1- 19 636 500
- US-A1- 2008 093 099
- US-B1- 6 355 882
- US-B1- 7 674 974

## Description

The present invention relates to a mounting box for mounting in a wall for housing therein electrical components such as sockets, switches, etc., according to the preamble of claim 1.

Flush mounting box assemblies are a known concept in the electrical industry. They offer the advantage of having an electrical item such as a socket, switch, network connection point, etc. safely built into the wall. With this set-up the necessary cable connections are made inside the mounting box to ensure that, after installation, only a very small part of the functional unit is located on the outside of the wall. Specific features of these flush mounting box assemblies are standardised, including the Belgian NBN C 61-670 standards, to make it easier for the end user to replace installed components without having to replace the flush mounting box.

The known type of flush mounting assembly comprises a hollow box open at one end, which can be mounted into a cutout in the wall and is intended to provide a space in which an electrical component can be installed, or partially installed, through the open end. With the known mounting box the electrical component is secured in the flush mounting element with screws or clamps. A cover, with a surface area greater than the open end of the flush mounting element and wall opening, is then placed over the electrical component to ensure that the wall opening is covered as necessary.

To create an adequate dustproof and watertight seal on the known flush mounting box for example in accordance with the IP-55 standard, an elastic seal is installed between the cover and the wall. This seal is slightly compressed between the cover and the wall as the cover is secured thus creating a more or less dustproof and watertight seal between the environment and the interior of the box. Such flush mounting box can be found in WO 02/13346.

The disadvantage of this approach is that it is difficult to achieve an entirely waterproof seal when mounting on an uneven wall surface. On such surfaces the seal between the wall and cover does not compress evenly, or does not compress at all, over the entire circumference which means there is a risk of water penetration at these points.

US 7,674,974 which reflects the preamble of claim 1 discloses a plurality of siding flange implementations comprising weatherproof siding flanges combined with an electrical wall box or a while-in-use electrical cover. The siding flange may be integrally formed with the electrical box or removably coupled to the electrical wall box, for example, on an inside surface of the box. The siding flange may comprise a lip extending forward of the siding flange and having one or more grooves therein. The grooves may allow portions of the lip to be removed to adapt to varying siding material thickness.

The purpose of this invention is to provide for a flush mounting box with improved dustproof and watertight properties.

This is achieved by the mounting box of claim 1. The mounting box comprises a flange mounted at the open end. When in place the flange is configured to cover the opening in the wall. It is also fixed to the mounting box by means of a watertight seal and can be removed, at least to a large extent, with one or more specific post processing operations.

Due to the fixed connection between the mounting flange and hollow flush mounting box, water penetration is prevented and thus improved waterproofness is guaranteed, irrespective of whether the wall in which the mounting box is housed has an even surface or hot. This makes it possible, for instance, to use the mounting box based on this invention in external walls with a slightly uneven surface, e.g. preformed bricks, uneven plastering or natural stone. Furthermore, by completely or partially removing the mounting flange, the mounting box of this invention can be converted into a reduced form which can be used for other applications.

With one version of the mounting box based on this invention the hollow flush mounting element has a mainly cylindrical external wall with a first closed and a second open end. This means that the wall opening can be made by simply using a hole saw with a diameter slightly larger than the external diameter of the outer cylinder wall. In a specific embodiment, the outer cylinder wall has a diameter between 55 and 80 mm.

The mounting flange has essentially a frame shape, with an essentially smooth rear side intended to face the wall when mounted and a front side configured to connect to the cover frame of an electrical component. In the case of a frame having a horizontal edge, this embodiment has the advantage that the mounting box can easily be levelled by, for example, placing a spirit level on the horizontal edge of the frame during installation.

In a further embodiment, the essentially smooth rear side of the flange has a groove around its circumference for the application of sealant. This embodiment has the advantage that an additional seal can be achieved between the frame and wall, to seal any gaps between them. On a smooth wall this will prevent the penetration of dust or water into the opening in which the flush mounting element is installed. The seal will preferably be elastomer.

In an embodiment of the mounting box according to the present invention the unit made up of the mounting flange and flush mounting element is such that, upon installation in a wall, it can easily be divided, whereby at least the section of the flange protruding from the wall can be sectioned off. The advantage of this embodiment is that the mounting box can thus be adapted to standard dimensions and electrical components built to these dimensions can be mounted in the usual manner.

In an embodiment of the mounting box according to the present invention, the connection between the mounting flange and flush mounting element can be disassembled using a hole saw. This embodiment has the advantage that the same type of tool used to create the hole in the wall can be used to section off the mounting flange. In a specific embodiment, the mounting flange has guide marks on the front to align the hole saw. In a more specific embodiment, the guide marks are constructed by a frame type upstanding edge on the front of the mounting flange, within which the hole saw can be positioned, with a diameter that in essence matches the diameter of the open end.

The watertight connection is created by applying a watertight adhesive between the mounting flange and flush mounting element. In a specific embodiment the watertight adhesive is configured to soften upon heating to ensure that the mounting flange can be removed from the flush mounting element once the adhesive seal between the two has been heated. This embodiment has the advantage that the mounting flange can easily be taken off without the risk of damage to the wall or other components of the mounting box. In a preferred embodiment, the adhesive is configured to soften at a temperature in excess of 70 degrees Celsius, preferably in excess of 80 degrees Celsius and between 80 and 200°C.

In an embodiment of the mounting box according to the present invention, the mounting flange and flush mounting element are made of plastic and the watertight seal is created by a plastic weld. This embodiment has the advantage that plastics with good mechanical properties but which are difficult to bond, such as specific types of polypropylene, can still be used to manufacture the mounting box according to the present invention.

In an embodiment of the mounting box according to the present invention, the mounting flange and flush mounting element consist of a single unit made of plastic. This embodiment has the advantage that extremely high water tightness and mechanical strength can be achieved. In a specific embodiment, a break-off notch is foreseen, which facilitates a simple separation of the mounting flange from the flush mounting element.

The mounting flange is equipped with mounting means, protruding from the flush mounting element, coupleable with an electrical component. In the case of the presence of the mounting flange, the installation of the electrical component in the mounting box is greatly simplified while the dimensions of the flush mounting element remain the same after removal of the flange. In a specific embodiment, the mounting means and mounting flange are a single piece. These types of mounting means may, for example, comprise one, two or more supports, e.g. brackets, projecting from the mounting flange into the flush mounting element. These supports could then be equipped, for example, with clamps to clamp electrical components or with threaded holes.

According to another aspect, the present invention also includes a method for post processing of the mounting box according to the present invention, comprising at least the removal, to a large extent, of the mounting flange. In accordance with the various described versions of the mounting box this can be achieved by drilling with a hole saw or heating up the adhesive bond.

A number of non-limiting embodiments of the present invention will be described by way of example with reference to the accompanying drawings, in which:
Figure 1 shows a schematic perspective view of a first embodiment of a mounting box according to the invention, in which the rear of the flush mounting element and rear of the mounting flange are visible;
Figure 2 shows a schematic perspective view of the embodiment in figure 1, in which the open end of the flush mounting element and front of the mounting flange can be seen;
Figure 3 shows a top view of the embodiment in figure 1, looking at the front of the mounting flange;
Figure 4 shows a detailed view of mounting means connected to a mounting flange;
Figure 5 shows a schematic view of a second embodiment of the mounting box according to the invention.

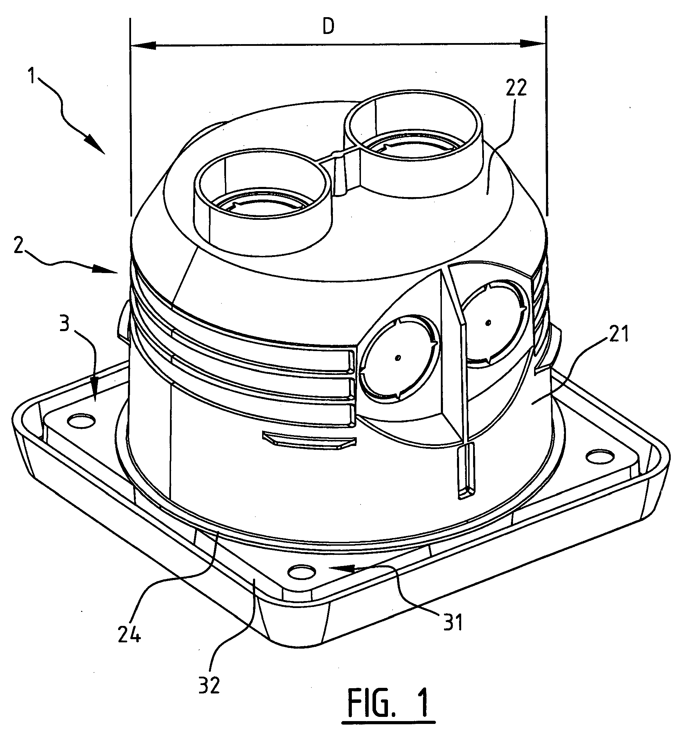

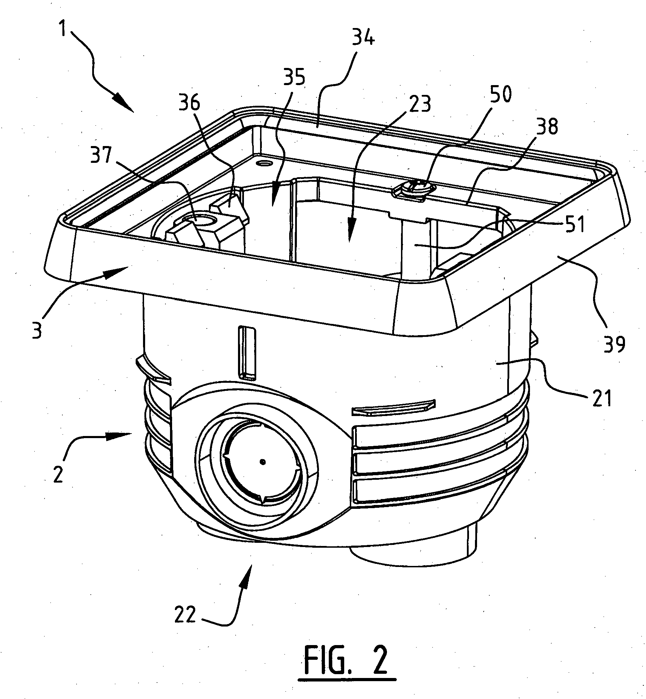

Figures 1-3 illustrate a first embodiment of a wall mounting box 1 according to the present invention. This type of mounting box is intended to house electrical components such as sockets, switches, etc. In essence the mounting box consists of a flush mounting element 2 and mounting flange 3.

The flush mounting element 2 is typically a flush mounting box designed to comply with the Belgian NBN C 61-670 standard or equivalent international standards such as DIN 49073. The hollow flush mounting element 2 has a cylindrical body 21 with an end wall 22 at one end and an opening 23 at the other end. The external diameter of the flush mounting element is typically between 55 and 80 mm, for example, approximately 70 mm. The internal depth of the flush mounting housing is typically between 40 and 80 mm, for example, approximately 50 mm. The flush mounting element 2 can be mounted in an opening in the wall. If the flush mounting element has a cylindrical shape this opening will typically be created using a hole saw. Inside flush mounting element 2 is a space in which components such as sockets or switches can be inserted, at least partially, via opening 23.

Mounting flange 3 extends from the open end 24 around opening 23. The mounting flange may also comprise components 35-37 that extend into the body of the flush mounting element, as described in detail below. In the illustrated embodiment, mounting flange 3 is shaped like a frame with an essentially square external circumference 39 and internal circumference 38, which is adapted to the dimensions of opening 23. The mounting flange will, therefore, extend around the wall opening when mounting box 1 is mounted in the wall. Flush mounting element 2 may also be equipped on the inside with threaded holes 51 for screws 50, which protrude through mounting flange 3.

Mounting flange 3 is secured via a watertight connection, for example in this case an adhesive bond or weld, to open end 24 of flush mounting element 2. In this case open end 24 has a smooth circumferential edge which fits against the smooth rear side 31 of the mounting flange. This way the adhesive can easily be applied to this smooth circumferential edge. As will be described in more detail below mounting flange 3 can be removed, at least to a large extent, from flush mounting housing 2 once it is wall mounted via one or more specific post processing operations.

Mounting flange 3 and flush mounting housing 2 could, for example, be of injection moulded plastic material with appropriate properties such as polypropylene. If the components are bonded by an adhesive, different material types can be used for the flush mounting element and mounting flange, e.g. a plastic flush mounting housing can be combined with a mounting flange made of another material such as stainless steel.

Mounting flange 3 has in essence a smooth rear side 31, which is intended to face the wall when mounted. A circumferential groove 32 for a (not illustrated) seal at the rear is optional. This seal could be in the shape of a sealing gasket extending across the entire rear side 31, between the outer wall of flush mounting element 2 and the external circumference of mounting flange 3, with a chamfer near circumference groove 32. Particularly with an uneven wall, e.g. a brick built wall, this type of sealing gasket will compensate for any play or openings between the rear of mounting flange 3 and the wall.

Mounting flange 3 also has a front 33 intended to connect to a (not illustrated) cover frame or plate, which is part of electrical components such as sockets or switches. With respect to the embodiment illustrated in figures 1-3, the cover frames and plates usable, for example, for the applicant's known mounting boxes can also be used with the mounting boxes based of the invention. The front is preferably fitted with an upstanding circumferential edge 34. In the illustrated version this upstanding edge 34 has two advantages: it facilitates on the one hand the positioning of a cover frame or plate and on the other hand the positioning of a hole saw within this circumferential edge to drill the mounting flange near open end 24.

Mounting box 1 mounted into the wall with a part such as mounting flange 3 protruding from it, can be removed relatively easily, whereby the remaining part, i.e. flush mounting element of box 2, has standard dimensions so that it can be used for another application in accordance with the standard and as such complies with the Belgian NBN C 61-670 standard. Threaded holes 51 and screws 50 make it possible to mount other cover frames on the flush mounting box 2.

According to a possible embodiment a special adhesive will be used for the connection between flush mounting box 2 and mounting flange 3. This adhesive will soften at high temperatures, for example from approximately 75°C, i.e. temperatures that exceed the normal operating temperatures associated with a flush mounting box. If after a period of time mounting box 1 is no longer required in its present format, the adhesive can be melted, e.g. by blowing hot air onto the mounting flange, which can then be removed.

Another possibility is to use a hole saw to open up the connection between the mounting flange and flush mounting box, near open end 24. In that case the upstanding circumferential edge 34 can be used as an alignment guide for the hole saw with a diameter which essentially matches the dimensions of open end 24. It is, therefore, also possible to connect flush mounting box 2 and mounting flange 3 using any appropriate watertight adhesive or by welding. The mounting flange and flush mounting box can also be made in one piece from plastic material. In that case it is possible to include a break-off notch or thinner wall near the transition between mounting flange 3 and flush mounting box 2. With a break-off notch the connection between flush mounting box 2 and mounting flange 3 can also be opened up, when the complete unit is installed in the wall, by inserting a screw driver between mounting flange 3 and the wall and levering mounting flange 3. The break-off notch will snap as a result enabling mounting flange 3 to be removed from flush mounting box 2.

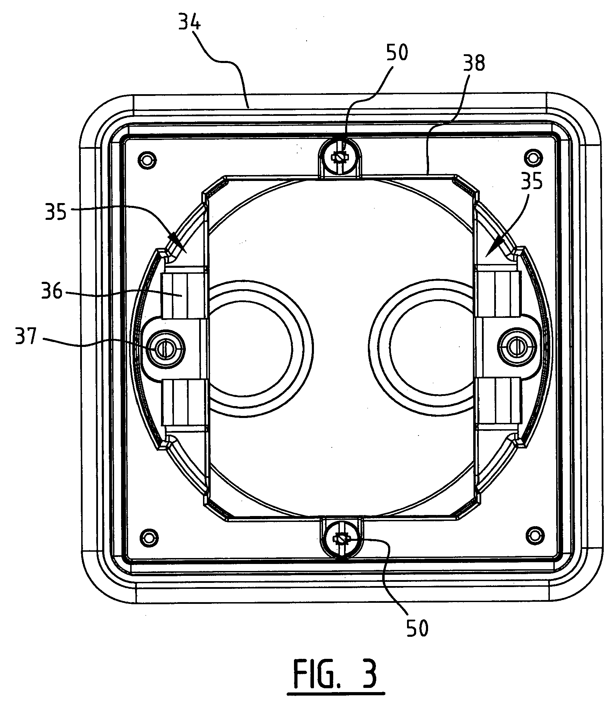

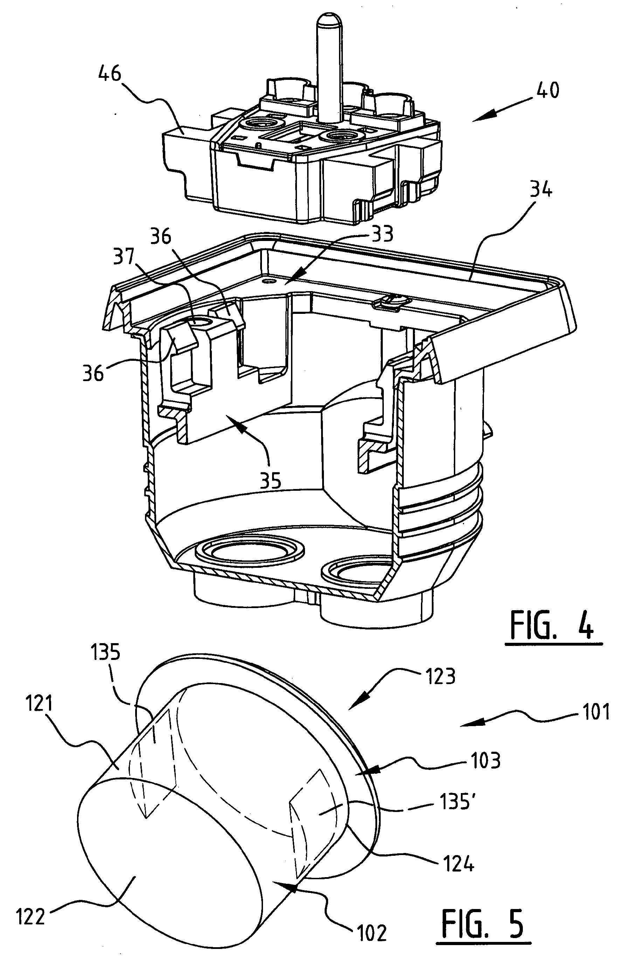

Supporting brackets 35, e.g. two supporting brackets 35 facing each other, are fitted near the internal circumference of mounting flange 3 and protrude into flush mounting box 2, as illustrated in figures 3 and 4. Each supporting bracket 35 is fitted with mounting means 36, 37 to connect various electrical components with mounting box 1. These mounting means consist of a central screw hole 37 and two adjoining clamping lugs 36, which have a chamfer at the top to give them grip above supports 46, which are part of an electrical component 40 (e.g. a socket) that can be snap fitted into the flush mounting box, see figure 4.

Although the flush mounting box embodiment illustrated in figures 1-3 is essentially in the shape of a cylinder, skilled technicians will understand that other shapes, e.g. a cuboid, prism, etc. are also feasible.

Finally, figure 5 illustrates a second embodiment of a mounting box according to the present invention. In this case, mounting box 101 comprises a flush mounting box 102 and ring shaped mounting flange 103. Flush mounting box 102 has a mainly cylindrical body 121 with an end wall 122 and open end 123. The end edge 124 of open end 123 is connected with a watertight seal to mounting flange 103. Furthermore, schematically illustrated mounting means 135, 135' are fitted to the internal wall of the flush mounting box 102. These mounting means could, for example, be similar to those described in figures 1-3, but in this case they are fitted to supports connected to the internal wall rather than on brackets connected to the mounting flange.

This invention is not limited to the different embodiments described above and a person skilled in the art will understand that many modifications and variations are feasible without abandoning the framework of this invention. This invention is exclusively defined by the following claims.

## Claims

1. Mounting box (1, 101) for mounting in a wall to house electrical components (40), the mounting box comprising:
- a hollow flush mounting element (2, 102) with an open end (23, 123), said flush mounting element (2, 102) can be installed in an opening in a wall and is intended to create a space in which said electrical components (40) can be installed, or partially installed, through the open end (23, 123);
- a mounting flange (3, 103) facing outward from the open end (23, 123) configured to extend around the wall opening once mounted; wherein the mounting flange (3, 103) is fixedly connected via a watertight connection to the hollow flush mounting element (2, 102) and can, at least to a large extent, be removed with one or more specific post processing operations; **characterized in that** the watertight connection is formed by applying a watertight adhesive between the mounting flange (3, 103) and flush mounting element (2, 102);
**in that** the mounting flange (3, 103) has a frame shape with an essentially smooth rear side (31) intended to face the wall when mounted; and a front side (38) configured to connect to the cover frame of an electrical component; and
**in that** the mounting flange (3, 103) has mounting means (36, 37) protruding in the flush mounting element (2, 102) which mounting means are coupleable to the electrical component.

2. Mounting box (1, 101) according to claim 1, **characterized in that** the open end (24, 124) has a smooth circumferential edge, whereby the watertight adhesive is foreseen between the smooth circumferential edge (24, 124) and mounting flange in order to obtain a watertight connection between the mounting flange (3, 103) and flush mounting element (2, 102).

3. Mounting box (1, 101) according to claim 1 or 2, **characterized in that** the watertight adhesive is configured to soften upon heating so that the mounting flange (3, 103) can be removed from the flush mounting element (2, 102) once the adhesive bond between them has been heated.

4. Mounting box (1, 101) according to any of the preceding claims, **characterized in that** the mounting box (1, 101) can be converted into a standard flush mounting element with one or more specific post processing operations.

5. Mounting box (1, 101) according to any of the preceding claims, **characterized in that** the hollow flush mounting element (2, 102) has an essentially cylindrical outer wall (21, 121) with one end sealed by the end wall (22, 122) and a second end (24, 124), whereby this second end (24, 124) forms the open end (23, 123) of the hollow flush mounting element (2, 102).

6. Mounting box (1, 101) according to claim 5, **characterized in that** the cylindrical outer wall (21, 121) has a diameter between 55 and 80 mm.

7. Mounting box (1, 101) according to any of the preceding claims, **characterised in that** the essentially smooth rear side (31) has a circumferential groove (32) for the housing of a sealant.

8. Mounting box (1, 101) according to any of the preceding claims, **characterized in that** the assembly of the mounting flange (3, 103) and flush mounting element (2, 102) is such that, upon installation in a wall, it can easily be sectioned, whereby at least the section of the mounting flange (3, 103) protruding from the wall can be sectioned off.

9. Mounting box (1, 101) according to any of the preceding claims, **characterized in that** the connection between the mounting flange (3, 103) and flush mounting element (2, 102) can be disassembled using a hole saw.

10. Mounting box (1, 101) according to any of the preceding claims, **characterized in that** the mounting flange (3, 103) has guide means (34) at the front to align the hole saw.

11. Mounting box (1, 101) according to claim 10, **characterized in that** the guide marks are formed by a frame type upstanding edge (34) on the front of the mounting flange (3) for positioning a hole saw with a diameter that essentially matches the diameter of the open end (23).

12. Mounting box (1, 101) according to any of the preceding claims, **characterized in that** the internal circumference of the mounting flange (3) has at least one supporting bracket (35) protruding into the flush mounting element (2), whereby fixing means (36, 37) are connected to at least one supporting bracket (35).

13. Mounting box (1, 101) according to claim 12, **characterized in that** the at least one supporting bracket (35), fixing means (36, 37) and mounting flange (3) are formed as a single unit.

14. Method for the post processing of a mounting box (1, 101) according to any of the preceding claims, wherein the watertight connection is formed by applying a watertight adhesive between the mounting flange (3, 103) and flush mounting element (2, 102); wherein the method comprises the step of removing at least to a large extent the mounting flange (3,103) from the flush mounting element (2, 102); wherein removing at least to a large extent the mounting flange (3, 103) comprises the following steps:
- heating of the watertight adhesive seal; and
- breaking of the watertight connection by removing the mounting flange (3, 103) from the flush mounting element (2, 102).

15. Method for the post processing of a mounting box (1, 101) according to claim 10 or 11, wherein the mounting flange (3, 103) is fitted at the front with guide means (34) to align a hole saw, wherein the method comprises the step of removing at least to a large extent the mounting flange (3,103) from the flush mounting element (2, 102); wherein removing at least to a large extent the mounting flange (3, 103) comprises the following steps:
- positioning of a hole saw using the guide means (34);
- drilling the connection between the mounting flange (3) and flush mounting element (2); and
- removing the mounting flange (3) from the flush mounting element (2).

## Patentansprüche

1. Einbaukasten (1,101) zum Einbau in eine Wand, um elektrische Bauteile (40) unterzubringen, wobei der Einbaukasten umfasst:
- Hohl Unterputzeinbauelement (2,102) mit einem offenen Ende (23,123), wobei das Unterputzeinbauelement (2,102) in eine Öffnung in einer Wand installiert werden kann und vorgesehen ist, einen Raum zu schaffen, in welchem durch das offene Ende (23,123) elektrische Bauteile (40) installiert oder teilweise installiert werden können;
- einen Einbauflansch (3,103), der von dem offenen Ende (23,123) nach außen gerichtet ist und so konfiguriert ist, dass er nach dem Einbau um die Wandöffnung verläuft, wobei der Einbauflansch (3,103) über eine wasserdichte Verbindung mit dem Hohl Unterputzeinbauelement (2,102) fest verbunden ist und mit einem oder mehreren speziellen nachträglichen Bearbeitungsgängen mindestens zu einem großen Teil entfernt werden kann, **dadurch gekennzeichnet,**
**dass** die wasserdichte Verbindung gebildet wird durch aufbringen eines wasserdichte Klebstoff zwischen dem Einbauflansch (3,103) und dem Unterputzeinbauelement (2,102);
**dass** der Einbauflansch (3,103) eine Rahmenform mit einer im Wesentlichen glatten Rückseite (31) hat, die nach dem Einbau an der Wand anliegen soll; sowie eine Vorderseite (38), die so konfiguriert ist, dass sie sich mit dem Abdeckrahmen eines elektrischen Bauteils verbindet; und
**dass** der Einbauflansch (3,103) Befestigungsmittel (36,37) aufweist, die in das Hohl Unterputzeinbauelement (2,102) hineinragen, wobei die Befestigungsmittel mit dem elektrischen Bauteil koppelbar sind.

2. Einbaukasten (1,101) nach Anspruch 1, **dadurch gekennzeichnet, dass** das offene Ende (24,124) einen glatten peripheren Rand hat, für den der wasserdichte Klebstoff zwischen dem glatten peripheren Rand (24,124) und Einbauflansch vorgesehen ist, um eine wasserdichte Verbindung zwischen dem Einbauflansch (3,103) und dem Unterputzeinbauelement (2,102) zu erhalten.

3. Einbaukasten (1,101) nach Anspruch 1 oder 2, **dadurch gekennzeichnet, dass** der wasserdichte Klebstoff so beschaffen ist, dass er beim Erhitzen weich wird, so dass der Einbauflansch (3,103) von dem Unterputzeinbauelement (2,102) entfernt werden kann, sobald die Klebeverbindung zwischen ihnen erhitzt worden ist.

4. Einbaukasten (1,101) nach einem der vorgenannten Ansprüche, **dadurch gekennzeichnet, dass** der Einbaukasten (1,101) mit einem oder mehreren speziellen nachträglichen Arbeitsgängen in ein Standard-Unterputzeinbauelement umgewandelt werden kann.

5. Einbaukasten (1,101) nach einem der vorgenannten Ansprüche, **dadurch gekennzeichnet, dass** das Hohl Unterputzeinbauelement (2,102) eine im Wesentlichen zylindrische Außenwand (21,121) hat mit dem einen Ende versiegelt mit Hilfe der Stirnwand (22,122) sowie ein zweites Ende (24,124), wodurch dieses zweite Ende (24,124) das offene Ende (23,123) des Hohl Unterputzeinbauelements (2,102) bildet.

6. Einbaukasten (1,101) nach Anspruch 5, **dadurch gekennzeichnet, dass** die zylindrische Außenwand (21,121) einen Durchmesser zwischen 55 und 80 mm hat.

7. Einbaukasten (1,101) nach einem der vorgenannten Ansprüche, **dadurch gekennzeichnet, dass** die im Wesentlichen glatte Rückseite (31) eine periphere Vertiefung (32) für die Aufnahme von Siegelmittel hat.

8. Einbaukasten (1,101) nach einem der vorgenannten Ansprüche, **dadurch gekennzeichnet, dass** der Zusammenbau des Einbauflansches (3,103) und Unterputzeinbauelements (2,102) derart erfolgt, dass bei Einbau in eine Wand dieser leicht sektioniert werden kann, wodurch mindestens die Sektion des Einbauflansches (3,103), die aus der Wand herausragt, abgetrennt werden kann.

9. Einbaukasten (1,101) nach einem der vorgenannten Ansprüche, **dadurch gekennzeichnet, dass** die Verbindung zwischen dem Einbauflansch (3,103) und Unterputzeinbauelement (2,102) unter Anwendung einer Lochkreissäge auseinandergebaut werden kann.

10. Einbaukasten (1,101) nach einem der vorgenannten Ansprüche, **dadurch gekennzeichnet, dass** der Einbauflansch (3,103) an der Vorderseite zur Ausrichtung mit der Lochkreissäge Führungsmittel (34) hat.

11. Einbaukasten (1,101) nach Anspruch 10, **dadurch gekennzeichnet, dass** die Führungsmarkierungen durch die hochstehende Kante (34) vom Rahmentyp an der Vorderseite des Einbauflansches (3) zum Positionieren einer Lochkreissäge mit einem Durchmesser erzeugt werden, der im Wesentlichen zu dem Durchmesser der offenen Seite (23) passt.

12. Einbaukasten (1,101) nach einem der vorgenannten Ansprüche, **dadurch gekennzeichnet, dass** der innere Umfang des Einbauflansches (3) mindestens ein Tragwinkel (35) hat, der in das Unterputzeinbauelement (2) hineinragt, wodurch Befestigungsmittel (36,37) mindestens mit einem Tragwinkel (35) verbunden sind.

13. Einbaukasten (1,101) nach Anspruch 12, **dadurch gekennzeichnet, dass** mindestens ein Tragwinkel (35), Befestigungsmittel (36,37) und Einbauflansch (3) als eine einzige Einheit ausgebildet sind.

14. Verfahren zum nachträglichen Bearbeiten eines Einbaukastens (1,101) nach einem der vorgenannten Ansprüche, wobei die wasserdichte Verbindung gebildet wird, indem zwischen dem Einbauflansch (3,103) und dem Unterputzeinbauelement (2,102) ein wasserdichte Klebstoff aufgebracht wird; wobei das Verfahren den Schritt umfasst, mindestens zum großen Teil den Einbauflansch (3,103) von dem Unterputzeinbauelement (2,102) zu entfernen; wobei das Entfernen mindestens zum großen Teil des Einbauflansches (3,103) die folgenden Schritte umfasst:
Erhitzen des wasserdichten Klebstoffsiegels und
Trennen der wasserdichten Verbindung durch Entfernen des Einbauflansches (3,103) von dem Unterputzeinbauelement (2,102).

15. Verfahren zum nachträglichen Bearbeiten eines Einbaukastens (1,101) nach Anspruch 10 oder 11, wobei das Verfahren den Schritt umfasst, mindestens zum großen Teil den Einbauflansch (3,103) von dem Unterputzeinbauelement (2,102) zu entfernen; wobei das Entfernen mindestens zum großen Teil des Einbauflansches (3,103) die folgenden Schritte umfasst:
Positionieren einer Lochkreissäge unter Verwendung des Führungsmittels (34);
Bohren der Verbindung zwischen dem Einbauflansch (3) und Unterputzeinbauelement (2) und
Entfernen des Einbauflansches (3) von dem Unterputzeinbauelement (2).

## Revendications

1. Boîte de montage (1, 101) pour montage dans une paroi pour loger des composants électriques (40), la boîte de montage comprenant :
- un élément de montage creux encastré (2, 102) avec une extrémité ouverte (23, 123), ledit élément de montage encastré (2, 102) pouvant être installé dans une ouverture dans une paroi et étant destiné à créer un espace dans lequel lesdits composants électriques (40) pouvant être installés ou partiellement installés à travers l'extrémité ouverte (23, 123);
- une bride de montage (3, 103) orientée vers l'extérieur depuis l'extrémité ouverte (23, 123) configurée pour s'étendre autour de l'ouverture dans la paroi une fois montée ; dans laquelle la bride de montage (3, 103) est connectée de façon fixe via une connexion étanche à l'élément de montage creux encastré (2, 102) et peut, au moins dans une large mesure, être enlevée avec une ou plusieurs opérations post-traitement spécifiques;
**caractérisée en ce que :** la connexion étanche est formée par application d'un adhésif étanche entre la bride de montage (3,
103) et l'élément de montage encastré (2, 102); la bride de montage (3, 103) a une forme de cadre avec un côté arrière essentiellement lisse (31) destiné à faire face à la paroi une fois monté, et un côté avant (38) configuré pour se raccorder au cadre de couverture d'un composant électrique; et
la bride de montage (3, 103) comporte des moyens de montage (36, 37) qui dépassent dans l'élément de montage encastré (2, 102), lesquels moyens de montage étant couplables avec le composant électrique.

2. Boîte de montage (1, 101) selon la revendication 1, **caractérisée en ce que** l'extrémité ouverte (24, 124) a un bord circonférentiel lisse, l'adhésif étanche étant prévu entre le bord circonférentiel lisse (24, 124) et la bride de montage afin d'obtenir une connexion étanche entre la bride de montage (3, 103) et l'élément de montage encastré (2, 102).

3. Boîte de montage (1, 101) selon la revendication 1 ou 2, **caractérisée en ce que** l'adhésif étanche est configuré pour ramollir à la chaleur de façon qu'on puisse enlever la bride de montage (3, 103) de l'élément de montage encastré (2, 102) une fois que la liaison adhésive entre eux a été chauffée.

4. Boîte de montage (1, 101) selon l'une quelconque des revendications précédentes, **caractérisée en ce que** la boîte de montage (1, 101) peut être convertie en un élément standard de montage encastré avec une ou plusieurs opérations post-traitement spécifiques.

5. Boîte de montage (1, 101) selon l'une quelconque des revendications précédentes, **caractérisée en ce que** l'élément de montage creux encastré (2, 102) a une paroi externe essentiellement cylindrique (21, 121) avec une extrémité scellée par la paroi finale (22, 122) et une deuxième extrémité (24, 124), la deuxième extrémité (24, 124) formant l'extrémité ouverte (23, 123) de l'élément de montage creux encastré (2, 102).

6. Boîte de montage (1, 101) selon la revendication 5, **caractérisée en ce que** la paroi externe cylindrique (21, 121) a un diamètre entre 55 et 80 mm.

7. Boîte de montage (1, 101) selon l'une quelconque des revendications précédentes, **caractérisée en ce que** le côté arrière essentiellement lisse (31) comporte une rainure circonférentielle (32) pour le logement produit d'étanchéité.

8. Boîte de montage (1, 101) selon l'une quelconque des revendications précédentes, **caractérisée en ce que** le montage de la bride de montage (3, 103) et de l'élément de montage creux encastré (2, 102) est tel que, à l'installation dans une paroi, on peut facilement le sectionner, au moins la section de la bride de montage (3, 103) dépassant de la paroi pouvant être sectionnée.

9. Boîte de montage (1, 101) selon l'une quelconque des revendications précédentes, **caractérisée en ce que** la connexion entre la bride de montage (3, 103) et l'élément de montage creux encastré (2, 102) peut être démontée en utilisant une scie-cloche.

10. Boîte de montage (1, 101) selon l'une quelconque des revendications précédentes, **caractérisée en ce que** la bride de montage (3, 103) comporte des moyens de guidage (34) à l'avant pour l'alignement de la scie-cloche.

11. Boîte de montage (1, 101) selon la revendication 10, **caractérisée en ce que** les marques de guidage sont formée par un bord saillant de type cadre (34) à l'avant de la bride de montage (3) pour positionner une scie-cloche avec un diamètre qui correspond fondamentalement au diamètre de l'extrémité ouverte (23).

12. Boîte de montage (1, 101) selon l'une quelconque des revendications précédentes, **caractérisée en ce que** la circonférence interne de la bride de montage (3) comporte au moins un crochet de support (35) dépassant dans l'élément de montage creux encastré (2), les moyens de fixation (36, 37) étant connectés à au moins un crochet de support (35).

13. Boîte de montage (1, 101) selon la revendication 12, **caractérisée en ce que** l'au moins un crochet de support (35), moyens de fixation (36, 37) et bride de montage (3) sont formés en une unique unité.

14. Procédé de post-traitement d'une boîte de montage (1, 101) selon l'une quelconque des revendications précédentes, dans lequel la connexion étanche est formée en appliquant un adhésif étanche entre la bride de montage (3, 103) et l'élément de montage encastré (2, 102) ; dans lequel le procédé comprend l'étape d'enlèvement au moins dans une large mesure de la bride de montage (3, 103) de l'élément de montage encastré (2, 102) ; dans lequel l'enlèvement au moins dans une large mesure de la bride de montage (3, 103) comprend les étapes suivantes :
- chauffage du joint adhésif étanche ; et
- rupture de la connexion étanche en enlevant la bride de montage (3, 103) de l'élément de montage encastré (2, 102).

15. Procédé de post-traitement d'une boîte de montage (1, 101) selon la revendication 10 ou 11, dans lequel la bride de montage (3, 103) est ajustée à l'avant avec des moyens de guidage (34) pour aligner une scie-cloche, dans lequel le procédé comprend l'étape d'enlèvement au moins dans une large mesure de la bride de montage (3, 103) de l'élément de montage encastré (2, 102) ; dans lequel enlever au moins dans une large mesure la bride de montage (3, 103) comprend les étapes suivantes :
- le positionnement d'une scie-cloche en utilisant les moyens de guidage (34) ;
- le forage de la connexion entre la brise de montage (3) et l'élément de montage encastré (2) ; et
- l'enlèvement de la brise de montage (3) de l'élément de montage encastré (2).
